# EUROPEAN PATENT APPLICATION

(11) **EP 3 193 030 A1**
(43) Date of publication of application: **19.07.2017**
(21) Application number: 15839663.0
(22) Date of filing: 25.08.2015
(51) Int. Cl.: F16C 25/04, F16C 17/10, F16C 33/12, F16C 33/14, F16C 33/20, G05G 1/44

(54) **BEARING BUSH AND PEDAL DEVICE WITH SAID BEARING BUSH**

(30) Priority: 11.09.2014 JP 2014185296; 30.01.2015 JP 2015016839
(71) Applicant: Oiles Corporation, Tokyo 108-0075 (JP)
(72) Inventor: KUMAZAWA, Katsutoshi, Fujisawa-shi Kanagawa 252-0811 (JP); OKIMURA, Akihiko, Fujisawa-shi Kanagawa 252-0811 (JP)
(74) Representative: J A Kemp
(86) International application number: PCT/JP2015/004262
(87) International publication number: WO 2016/038818

(57) **Abstract**

A bearing bush 1 includes a cylindrical portion 6 having a cylindrical inner surface 2 and a cylindrical outer surface 3; a cylindrical portion 12 having a cylindrical inner surface 7 and a cylindrical outer surface 8; a curved bulged portion 17 interposed between the cylindrical portions 6 and 12 in an axial direction X and having a curved concave inner surface 15 and a curved convex outer surface 16; an annular ring-shaped collar portion 19 provided at another end portion 18 in the axial direction X of the cylindrical portion 6 in such a manner as to extend in an outward direction A in a radial direction Y; a slit 21 which splits the cylindrical portions 6 and 12, the curved bulged portion 17, and the annular ring-shaped collar portion 19; and a plurality of inclined plate portions 23 which are formed integrally on an outer peripheral edge 22 of the annular ring-shaped collar portion 19 and extend in the outward direction A in the radial direction Y from the outer peripheral edge 22 in an inclined manner.

## Description

### TECHNICAL FIELD

The present invention relates to a bearing bush and a pedal device having the bearing bush.

### BACKGROUND ART

Generally, a brake pedal or a clutch pedal of an automobile is rotatably supported via a cylindrical boss by a shaft member which is supported by a pedal bracket fixed to a vehicle body member, e.g., a dash panel.

With a conventional pedal device having a pivotally supporting structure between a pedal bracket and a shaft member, a pair of synthetic resin-made bearing bushes each having a collar portion at a respective end thereof are press fitted to a boss with a pedal arm fixed to an outer peripheral surface thereof, such that a rear surface of the collar portion is abutted against an end face of the boss, the shaft member constituted by a bolt is inserted in the bearing bushes with a predetermined clearance (bearing clearance) therebetween, and the shaft member is fastened and fixed between a pair of pedal brackets by a nut.

### PRIOR ART DOCUMENTS

### PATENT DOCUMENTS

Patent Document 1: JP-UM-A-61-143217
Patent Document 2: JP-UM-A-6-23854

### SUMMARY OF THE INVENTION

### PROBLEMS THAT THE INVENTION IS TO SOLVE

With such a pedal device, an axial clearance is provided between the pedal bracket and the bearing bush to allow the pedal arm to rotate smoothly. However, since this clearance constitutes axial free play of the pedal arm, there are possibilities that abnormal noise (clicking noise) which is transmitted to the driver may be generated by the vibration of the pedal arm attributable to this free play, and that a pedal pad may sway laterally due to such free play. In either case, there is a problem of causing the operation feeling of the automobile to decline.

To overcome such a problem, if the clearance between the pedal bracket and the bearing bush is made small, sliding resistance between the pedal bracket and the bearing bush becomes large, so that the return of the pedal arm becomes defective, possibly causing the operation feeling of the automobile to decline to the contrary.

In addition, with the pedal device, radial free play (bearing clearance) between the bearing bush and the shaft member is required to be minimal by making a dimensional tolerance between the inner diameter of the bearing bush and the outer diameter of the bearing member as small as possible in order to improve the operation feeling of the automobile. However, if such free play in the radial direction is made small, the sliding resistance between the bearing bush and the bearing member becomes large, so that the return of the pedal arm becomes defective in the same way as described above, possibly causing the operation feeling of the automobile to decline in a similar manner.

Patent Document 1 describes a technique in which a guide member is provided on an outer peripheral surface of the boss of the pedal arm pivotally secured to a pedal bracket, and a bush is interposed between the guide member and the pedal bracket to reduce the lateral swaying of the pedal arm, thereby improving the operation feeling of the pedal arm. Patent Document 2 describes a technique in which a push plate nut is fitted over and fixed to an end portion of a support pin (shaft member), and the push plate nut fitted over the support pin functions to prevent the support pin from axially coming off and to exhibit a predetermined pressing force against the support pin, to thereby ensure smooth rotation of the pedal arm without generating free play.

However, the techniques described in Patent Document 1 and Patent Document 2 are both techniques for preventing the lateral swaying of the pedal arm, and no consideration is given to the prevention of a decline in the operation feeling and generation of abnormal noise which are attributable to the radial free play due to the dimensional tolerance between the bearing bush and the shaft member.

The present invention has been devised in view of the above-described aspects, and its object is to provide a bearing bush capable of preventing the lateral swaying of the pedal arm and preventing a decline in the operation feeling and generation of abnormal noise which are attributable to the radial free play, as well as a pedal device having the bearing bush.

### MEANS FOR SOLVING THE PROBLEMS

A bearing bush in accordance with the present invention comprises: a hollow main body portion; an inclined plate portion provided at one end portion of the hollow main body portion; at least one first slit provided in the hollow main body portion in such a manner as to extend from the one end portion of the hollow main body portion toward another end portion of the hollow main body portion; at least one second slit provided in the hollow main body portion in such a manner as to extend from the other end portion of the hollow main body portion toward the one end portion of the hollow main body portion; and at least one third slit provided in an inclined plate portion in such a manner as to communicate with the first slit at the one end portion of the hollow main body portion, wherein the hollow main body portion is rendered reducible in diameter by the first to the third slits, and the inclined plate portion is inclined in a direction directed from the other end portion of the hollow main body portion toward the one end portion of the hollow main body portion.

According to the bearing bush in accordance with the present invention, since the hollow main body portion is rendered reducible in diameter by the first to the third slits, it is possible to absorb the bearing clearance (free play) which is determined by a dimensional tolerance between the inner diameter dimension of the hollow main body portion and the outer diameter dimension of the bearing member, and it is possible to prevent a decline in the operation feeling and generation of abnormal noise which are attributable to the radial free play due to the bearing clearance. Further, since the inclined plate portion is inclined in a direction directed from the other end portion of the hollow main body portion toward the one end portion of the hollow main body portion, the axial clearance (free play) can be absorbed by the elastic deformation of the inclined plate portion, so that it is possible to prevent a decline in the operation feeling due to an increase of sliding resistance and the generation of abnormal noise attributable to the axial clearance (free play), thereby making it possible to attain improvement of the operation feeling.

A bearing bush in accordance with another aspect of the invention comprises: a hollow main body portion having an annular curved concave inner surface and an annular curved convex outer surface; an annular collar portion provided in such a manner as to extend radially outwardly from one end portion of the hollow main body portion; at least one first slit provided in the hollow main body portion in such a manner as to extend from the one end portion of the hollow main body portion toward another end portion of the hollow main body portion; at least one second slit provided in the hollow main body portion in such a manner as to extend from the other end portion of the hollow main body portion toward the one end portion of the hollow main body portion; at least one third slit provided in the annular collar portion in such a manner as to communicate with the first slit at the one end portion of the hollow main body portion; and at least one inclined plate portion provided in such a manner as to extend in a radially outward direction from an outer peripheral edge of the annular collar portion while being inclined in a direction directed from the other end portion of the hollow main body portion toward the one end portion of the hollow main body portion, wherein the hollow main body portion is rendered reducible in diameter by the first to the third slits.

According to such a bearing bush in accordance with the present invention, since the hollow main body portion is rendered reducible in diameter by at least one first slit provided in the hollow main body portion in such a manner as to extend from the one end portion of the hollow main body portion toward the other end portion of the hollow main body portion, at least one second slit provided in the hollow main body portion in such a manner as to extend from the other end portion of the hollow main body portion toward the one end portion of the hollow main body portion, and at least one third slit provided in the annular collar portion in such a manner as to communicate with the first slit at the one end portion of the hollow main body portion, it is possible to absorb the bearing clearance (free play) which is determined by a dimensional tolerance between the inner diameter dimension of the hollow main body portion and the outer diameter dimension of the bearing member, and it is possible to prevent a decline in the operation feeling and generation of abnormal noise which are attributable to the radial free play due to the bearing clearance. Further, since the at least one inclined plate portion provided in such a manner as to extend in the radially outward direction from the outer peripheral edge of the annular collar portion is inclined in a direction directed from the other end portion of the hollow main body portion toward the one end portion of the hollow main body portion, the axial clearance (free play) can be absorbed by the elastic deformation of the inclined plate portion, so that it is possible to prevent a decline in the operation feeling due to an increase of sliding resistance and the generation of abnormal noise attributable to the axial clearance (free play), thereby making it possible to attain improvement of the operation feeling.

In the present invention, the hollow main body portion may include a pair of cylindrical portions each having a cylindrical inner surface and a cylindrical outer surface and at least one curved bulged portion interposed between the pair of cylindrical portions and having a curved concave inner surface and a curved convex outer surface, in which case, the annular collar portion may be provided in such a manner as to extend radially outwardly from a cylindrical outer surface of one end portion of one of the cylindrical portions. Alternatively, the hollow main body portion may include at least one curved bulged portion having a curved concave inner surface and a curved convex outer surface, in which case the curved concave inner surface and the curved convex outer surface may be respectively continuously connected to respective ones of one and another annular ring-shaped end faces of the hollow main body portion and extend from the one annular ring-shaped end face to the other annular ring-shaped end face, and the annular collar portion may be provided in such a manner as to extend radially outwardly from the curved convex outer surface of the curved bulged portion. Still alternatively, the hollow main body portion may include a cylindrical portion having a cylindrical inner surface and a cylindrical outer surface and at least one curved bulged portion continuously connected to the cylindrical portion and having a curved concave inner surface and a curved convex outer surface, in which case the annular collar portion may be provided in such a manner as to extend radially outwardly from one end portion of the cylindrical portion to which one end portion of the curved bulged portion is continuously connected, and the other end portion of the hollow main body portion may be constituted by another end portion of the curved bulged portion. Furthermore, the hollow main body portion may include a cylindrical portion having a cylindrical inner surface and a cylindrical outer surface and at least one curved bulged portion continuously connected to the cylindrical portion and having a curved concave inner surface and a curved convex outer surface, in which case the annular collar portion may be provided in such a manner as to extend radially outwardly from one end portion of the curved bulged portion to which one end portion of the cylindrical portion is continuously connected, and the other end portion of the hollow main body portion may be constituted by another end portion of the cylindrical portion.

In the case where the hollow main body portion includes one pair of cylindrical portions, the pair of cylindrical portions may have an identical length in the axial direction, or may alternatively have different lengths in the axial length. In the case where the pair of cylindrical portions have different lengths in the axial length, the curved bulged portion is disposed in such a manner as to be offset on one end portion side or the other end portion side of the hollow main body portion.

In the present invention, the hollow main body portion may include one curved bulged portion which is continuously formed in a circumferential direction. Alternatively, however, the hollow main body portion may include a plurality of curved bulged portions arranged at intervals in the circumferential direction. Still further, the hollow main body portion may include two curved bulged portions which are arranged at intervals, preferably angular intervals of 180°, in the circumferential direction, or may include three or more curved bulged portions which are arranged at equal intervals with each other in the circumferential direction.

In the bearing bush in accordance with the present invention, the at least one first slit may communicate with the at least one second slit so as to form one slit which extends from the annular ring-shaped end face of the one end portion of the hollow main body portion to the annular ring-shaped end face of the other end portion thereof and splits the hollow main body portion in the circumferential direction. Alternatively, however, respective ones of the at least one first and the second slits spaced apart from each other in the circumferential direction may terminate between the one and the other end portions of the hollow main body portion, and may have overlapping portions which overlap with each other in the circumferential direction.

The bearing bush in accordance with the present invention may have only one inclined plate portion, but may alternatively have a plurality of inclined plate portions. The axial clearance (free play) can be uniformly absorbed if such a plurality of inclined plate portions are integrally formed on the outer peripheral edge of the annular collar portion in such a manner as to be spaced apart from each other in the circumferential direction, preferably at intervals of 180° in the case of two inclined plate portions and at equal intervals in the case of three inclined plate portions.

In the bearing bush in accordance with the present invention, the hollow main body portion, the annular collar portion, and the inclined plate portions may be integrally formed of a synthetic resin, such as polyacetal resin or polyamide resin, or may be formed integrally of a stainless steel plate or a nonferrous metal plate of such as copper or a copper alloy, or aluminum or an aluminum alloy. Furthermore, the hollow main body portion, the annular collar portion, and the inclined plate portions may be integrally formed of a multilayered plate including a thin steel plate, a porous sintered metal layer formed integrally on the thin steel plate, and a synthetic resin layer filled in and coated on the porous sintered metal layer.

A pedal device in accordance with the present invention comprises: a cylindrical boss; a pedal arm fixed to the boss; a shaft member disposed in the boss relatively rotatably with respect to the boss; a pedal bracket with both ends of the shaft member fixed respectively thereto; and the above-described bearing bush in which the hollow main body portion is disposed between the boss and the shaft member such that the curved convex outer surface is brought into contact with an inner surface of the boss, and the inclined plate portions are brought into contact with the pedal bracket, so as to form an annular void space between the curved concave inner surface and the outer surface of the shaft member.

According to the pedal device in accordance with the present invention, since the hollow main body portion is reducible in diameter and the curved convex outer surface is brought into contact with the inner surface of the boss, the bearing clearance (free play), which is determined by the inner diameter dimension of the bearing bush and the outer diameter dimension of the shaft member, is constantly maintained at an appropriate value, so that the generation of abnormal noise attributable to the bearing clearance is prevented. Furthermore, the lateral swaying of the pedal arm attributable to the axial clearance between the pedal bracket and the bearing bush is absorbed by the elastic deformation in the axial direction of the inclined plate portions. Therefore, the lateral swaying of the pedal arm and, hence, the generation of abnormal noise attributable to the lateral swaying are prevented.

With the pedal device in accordance with the present invention, when the hollow main body portion pressed fitted to the boss with the pedal arm fixed thereto is rotated together with the boss by the pedal operation of the pedal arm, since the inclined plate portions are in contact with the pedal bracket, sliding resistance between the bearing bush and the pedal bracket is not increased, thereby allowing such pedal operation to be effected smoothly.

### ADVANTAGES OF THE INVENTION

According to the present invention, it is possible to provide a bearing bush capable of preventing the lateral swaying of the pedal arm and of preventing a decline in the operation feeling and generation of abnormal noise which are attributable to radial free play, as well as a pedal device having the bearing bush.

### BRIEF DESCRIPTION OF THE DRAWINGS

Fig. 1 is an explanatory side elevational view of a preferred embodiment of a bearing bush of the invention;
Fig. 2 is an explanatory cross-sectional view taken in the direction of arrows along line II - II in Fig. 1;
Fig. 3 is an explanatory front elevational view of a preferred embodiment of a pedal device of the invention;
Fig. 4 is a partially enlarged, explanatory cross-sectional view of the embodiment shown in Fig. 3;
Fig. 5 is an explanatory side elevational view of another preferred embodiment of the bearing bush of the invention;
Fig. 6 is an explanatory cross-sectional view taken in the direction of arrows along line VI - VI in Fig. 5;
Fig. 7 is an explanatory cross-sectional view of still another preferred embodiment of the bearing bush of the invention;
Fig. 8 is an explanatory cross-sectional view of a further preferred embodiment of the bearing bush of the invention;
Fig. 9 is an explanatory cross-sectional view of a still further preferred embodiment of the bearing bush of the invention;
Fig. 10 is an explanatory cross-sectional view, taken in the direction of arrows along line X - X in Fig. 11, of a further preferred embodiment of the bearing bush of the invention;
Fig. 11 is an explanatory cross-sectional view taken in the direction of arrows along line XI - XI in Fig. 10;
Fig. 12 is an explanatory cross-sectional view, taken in the direction of arrows along line XII - XII in Fig. 13, of a further preferred embodiment of the bearing bush of the invention; and
Fig. 13 is an explanatory cross-sectional view taken in the direction of arrows along line XIII - XIII in Fig. 12.

### MODE FOR CARRYING OUT THE INVENTION

Next, a more detailed description will be given of the present invention and a mode for carrying it out with reference to the preferred embodiments illustrated in the drawings. It should be noted that the invention is not limited to these embodiments.

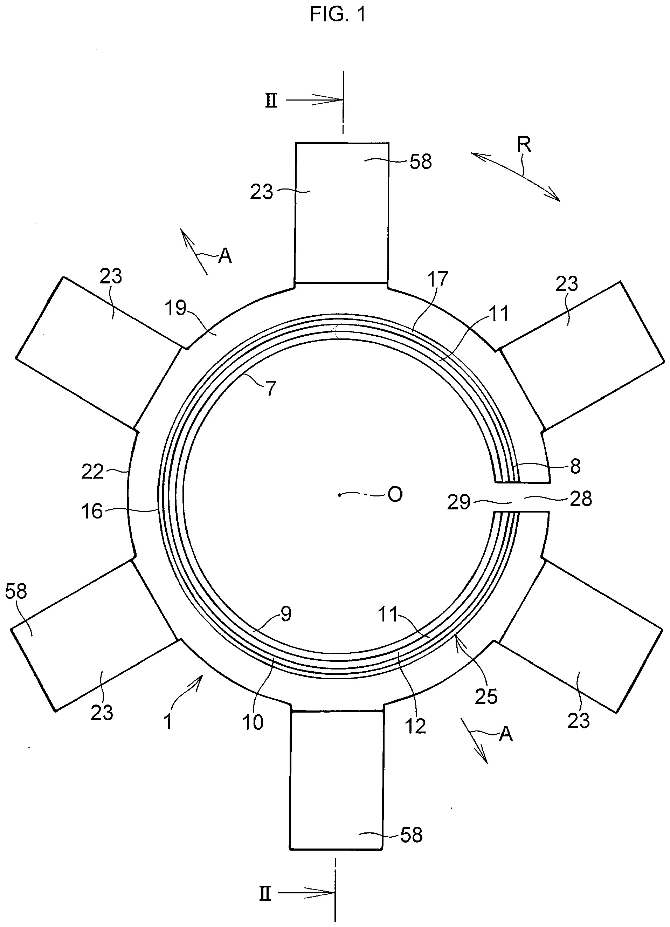

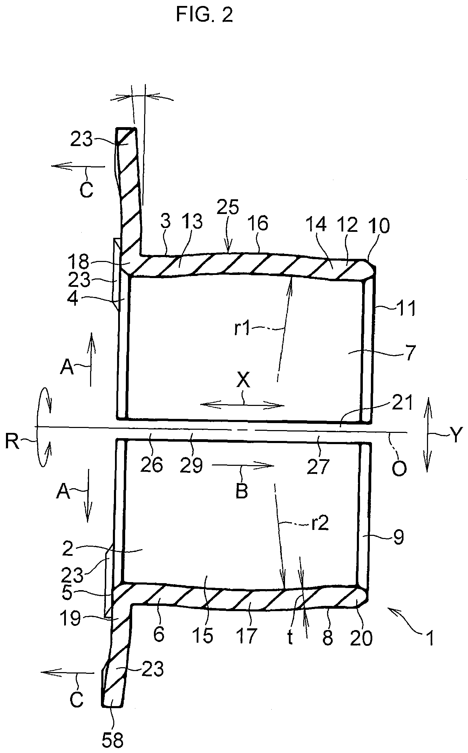

In Figs. 1 and 2, a bearing bush 1 in accordance with this embodiment is comprised of: a cylindrical portion 6 having a cylindrical inner surface 2, a cylindrical outer surface 3, an annular ring-shaped tapered inner surface 4 continuously connected to the cylindrical inner surface 2, and an annular ring-shaped end face 5 in an axial direction X continuously connected to the annular ring-shaped tapered inner surface 4; a cylindrical portion 12 having a cylindrical inner surface 7, a cylindrical outer surface 8, an annular ring-shaped tapered inner surface 9 and an annular ring-shaped tapered outer surface 10 respectively continuously connected to the cylindrical inner surface 7 and the cylindrical outer surface 8, and an annular ring-shaped end face 11 in the axial direction X continuously connected to both the annular ring-shaped tapered inner surface 9 and the annular ring-shaped tapered outer surface 10; a curved bulged portion 17 interposed between the cylindrical portions 6 and 12 in the axial direction X and having an annular curved concave inner surface 15 and an annular curved convex outer surface 16 which are continuously connected to the cylindrical inner surfaces 2 and 7 and the cylindrical outer surfaces 3 and 8 of respective one end portions 13 and 14 of the cylindrical portions 6 and 12 in the axial direction X; an annular ring-shaped collar portion 19 provided at another end portion 18 in the axial direction X of the cylindrical portion 6 in such a manner as to extend in an outward direction A in a radial direction Y; a slit 21 which extends from the annular ring-shaped end face 5 of the end portion 18 to the annular ring-shaped end face 11 of another end portion 20 in the axial direction X of the cylindrical portion 12, and which splits in a circumferential direction R about an axis O the respective ones of the cylindrical portions 6 and 12, the one curved bulged portion 17 which is continuously formed in the circumferential direction R, and the annular ring-shaped collar portion 19; and a plurality of, i.e., in this embodiment six, inclined plate portions 23 which are formed integrally on an outer peripheral edge 22 of the annular ring-shaped collar portion 19 in such a manner as to be spaced apart from each other at equal intervals (equiangular intervals of 60°) in the circumferential direction R, and which extend in the outward direction A in the radial direction Y from the outer peripheral edge 22 in such a manner as to be inclined in an opposite direction C to a direction B directed from the end portion 18 toward the end portion 20 in the axial direction X.

In this embodiment, the curved concave inner surface 15 is constituted by a part of a spherical surface having a radius r1, and if the thickness of the pair of cylindrical portions 6 and 12, the curved bulged portion 17, the annular ring-shaped collar portion 19, and the inclined plate portion 23 is assumed to be t, the curved convex outer surface 16 is constituted by a part of a spherical surface having a radius r2 (= r1 + t), but each of them may be constituted by a part of an elliptical surface.

The pair of cylindrical portions 6 and 12, the curved bulged portion 17, the annular ring-shaped collar portion 19, and the inclined plate portions 23 are integrally formed of a multilayered plate including a thin steel plate, a porous sintered metal layer formed integrally on the thin steel plate, and a synthetic resin layer filled in and coated on the porous sintered metal layer, and the cylindrical inner surfaces 2 and 7 and the curved concave inner surface 15 are constituted by exposed surfaces of the synthetic resin layer of such a multilayered plate.

In the bearing bush 1, the cylindrical portions 6 and 12 and the curved bulged portion 17 are rendered reducible in diameter by the slit 21, and the plurality of (in the illustrated case, six) plate-like inclined plate portions 23 are elastically deformable in the axial direction X by virtue of their elastic flexibility.

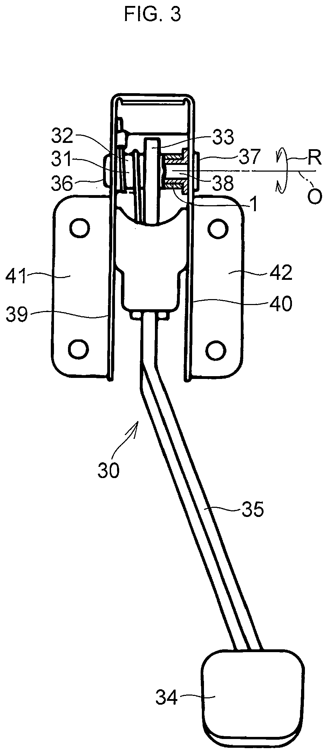

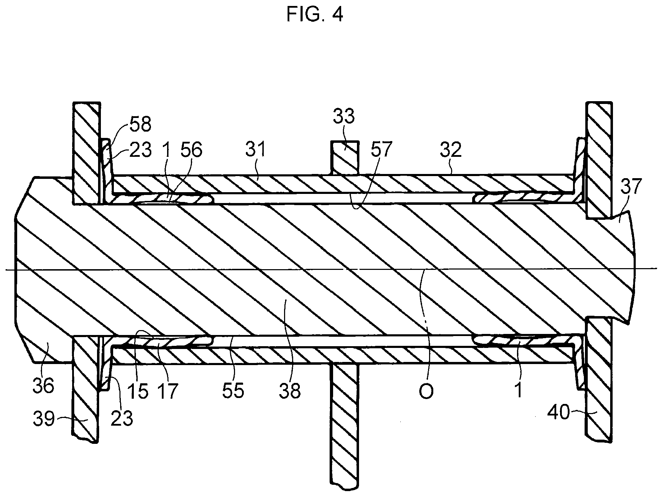

The bearing bush 1 is comprised of: a hollow main body portion 25 including the cylindrical portion 6 having the cylindrical inner surface 2 and the cylindrical outer surface 3, the cylindrical portion 12 having the cylindrical inner surface 7 and the cylindrical outer surface 8, and the curved bulged portion 17 interposed between the pair of cylindrical portions 6 and 12 and having the curved concave inner surface 15 and the curved convex outer surface 16; the annular ring-shaped collar portion 19 serving as an annular collar portion provided in such a manner as to extend in the outward direction A in the radial direction Y from the cylindrical outer surface 3 of the end portion 18 of the cylindrical portion 6 which is one end portion of the hollow main body portion 25; a slit 26 provided in the hollow main body portion 25 in such a manner as to extend from the end portion 18 of the hollow main body portion 25 toward the end portion 20 of the cylindrical portion 12 which is the other end portion of the hollow main body portion 25; a slit 27 provided in the hollow main body portion 25 in such a manner as to extend from the end portion 20 toward end portion 18; a slit 28 provided in the annular ring-shaped portion 19 in such a manner as to communicate at the end portion 18 with the slit 26 and to be open at the outer peripheral edge 22; and the inclined plate portions 23 provided in such a manner as to extend in the outward direction A in the radial direction Y from the outer peripheral edge 22 of the annular ring-shaped collar portion 19 while being inclined in the direction C directed from the end portion 20 toward the end portion 18, wherein the slit 26 extends from the annular ring-shaped end face 5 of the end portion 18 to the annular ring-shaped end face 11 of the end portion 20, and communicates with the slit 27 so as to form a single slit 29 for splitting the hollow main body portion 25 in the circumferential direction, and the hollow main body portion 25 is rendered reducible in diameter by the slit 21 which includes the slit 29 constituted by the slits 26 and 27 and the slit 28 for splitting the annular ring-shaped portion 19 in the circumferential direction. As shown in Figs. 3 and 4, a pedal device 30 which incorporates the above-described bearing bush 1 includes a cylindrical boss 31; a pedal arm 35 which, at a base portion (root portion) 33 at one end thereof, is fixed to a cylindrical outer surface 32 of the boss 31, and to another end of which a pedal 34 is mounted; a shaft member 38 disposed in the boss 31 relatively rotatably in the circumferential direction R with respect to the boss 31 and having end portions 36 and 37; and a pair of pedal brackets 41 and 42 which have side walls 39 and 40 with the end portions 36 and 37 of the shaft member 38 fixed thereto by caulking, and which are fixed to the dash panel of the vehicle body.

In such a pedal device 30, the bearing bush 1 is disposed on each of the side wall 39 side and the side wall 40 side. The bearing bush 1 on the side wall 39 side is disposed between the boss 31 and the shaft member 38, such that the cylindrical inner surfaces 2 and 7 of the pair of cylindrical portions 6 and 12 are respectively brought into contact with an outer surface 55 of the shaft member 38 and the curved convex outer surface 16 of the curved bulged portion 17 is brought into contact with a cylindrical inner surface 57 of the boss 31, so as to form an annular void space 56 between the curved concave inner surface 15 of the curved bulged portion 17 and the cylindrical outer surface 55 of the shaft member 38, while distal end portions (free end portions) 58 of the respective inclined plate portions 23 are brought into contact with the side wall 39 of the pedal bracket 41. Likewise, the bearing bush 1 on the side wall 40 side is also disposed between the boss 31 and the shaft member 38, such that the cylindrical inner surfaces 2 and 7 of the pair of cylindrical portions 6 and 12 are respectively brought into contact with the outer surface 55 of the shaft member 38 and the curved convex outer surface 16 of the curved bulged portion 17 is brought into contact with the inner surface 57 of the boss 31, so as to form the annular void space 56 between the curved concave inner surface 15 of the curved bulged portion 17 and the outer surface 55 of the shaft member 38, while the distal end portions 58 of the respective inclined plate portions 23 are brought into contact with the side wall 40 of the pedal bracket 42.

With the above-described pedal device 30, since the cylindrical inner surfaces 2 and 7 of the bearing bush 1 are reducible in diameter and the curved convex outer surface 16 of the curved bulged portion 17 is brought into contact with the inner surface 57 of the boss 31 so as to form the annular void space 56, the bearing clearance (free play), which is determined by the inner diameter dimension defined by the cylindrical inner surfaces 2 and 7 of the bearing bush 1 and the outer diameter dimension defined by the outer surface 55 of the shaft member 38, is constantly maintained at an appropriate value, so that the generation of abnormal noise attributable to the bearing clearance is prevented. Furthermore, since the lateral swaying of the pedal arm 35, which is attributable to the clearance in the radial direction Y between the side wall 39 of the pedal bracket 41 and the bearing bush 1 and to the clearance in the radial direction Y between the side wall 40 of the pedal bracket 42 and the bearing bush 1, is absorbed by the elastic deformation in the axial direction X of the inclined plate portions 23, so that the lateral swaying of the pedal arm 35 and, hence, the generation of abnormal noise attributable to the lateral swaying are prevented.

Moreover, with the pedal device 30, when the bearing bushes 1 press fitted to the inner surface 57 of the boss 31 with the pedal arm 35 fixed thereto are rotated in the circumferential direction R together with the boss 31 by the pedal operation of the pedal arm 35, since the bearing bushes 1 are in contact at the inclined plate portions 23 thereof with the side walls 39 and 40 of the pedal brackets 41 and 42, sliding resistance between the bearing bush 1 and each of the pedal brackets 41 and 42 does not increase, thereby allowing such pedal operation to be effected smoothly.

Furthermore, with the bearing bush 1 of the pedal device 30, since the plurality of inclined plate portions 23 are integrally formed at the outer peripheral edge 22 of the annular ring-shaped collar portion 19 in such a manner as to be spaced apart from each other at equal intervals in the circumferential direction R, it is possible to uniformly absorb the clearance (free play) in the axial direction X.

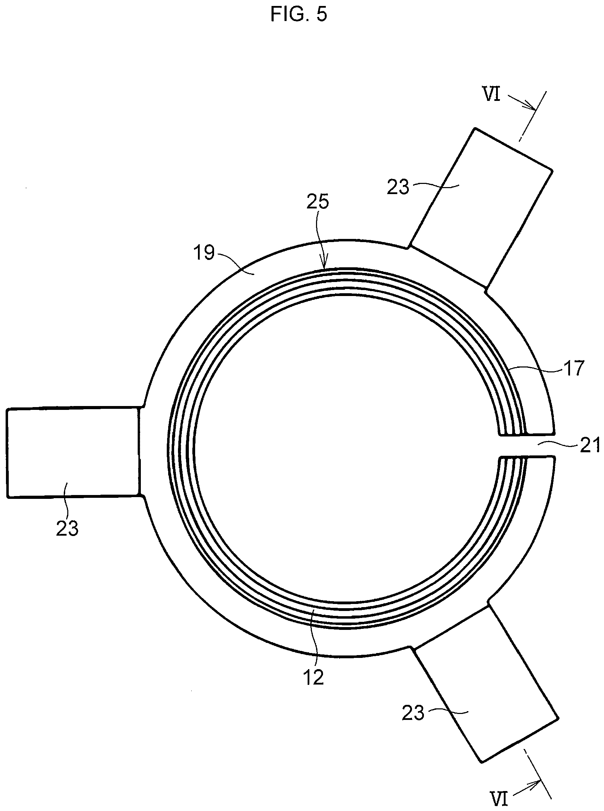

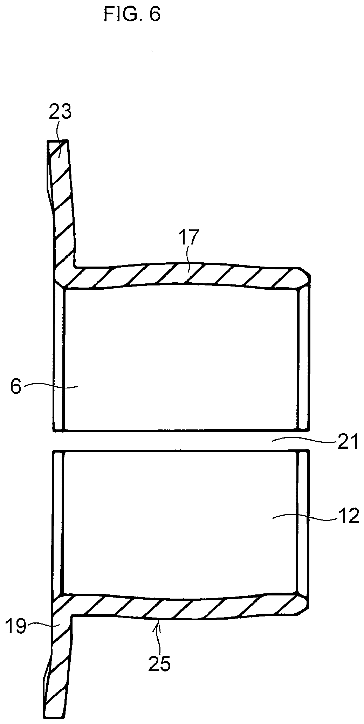

Incidentally, although the above-described bearing bush 1 has six inclined plate portions 23, the bearing bush 1, as shown in Figs. 5 and 6, may alternatively have three inclined plate portions 23 which are formed integrally on the outer peripheral edge 22 of the annular ring-shaped collar portion 19 in such a manner as to be spaced apart from each other at equal intervals (equiangular intervals of 120°) in the circumferential direction R, and which extend in the outward direction A in the radial direction Y from the outer peripheral edge 22 of the annular ring-shaped collar portion 19 in such a manner as to be inclined in the opposite direction C to the direction B directed from the other end portion 18 of the cylindrical portion 6 toward the other end portion 20 of the cylindrical portion 12 in the axial direction X. With the bearing bush 1 shown in Figs. 5 and 6, it is possible to lower the sliding resistance with respect to the side walls 39 and 40 of the pedal brackets 41 and 42.

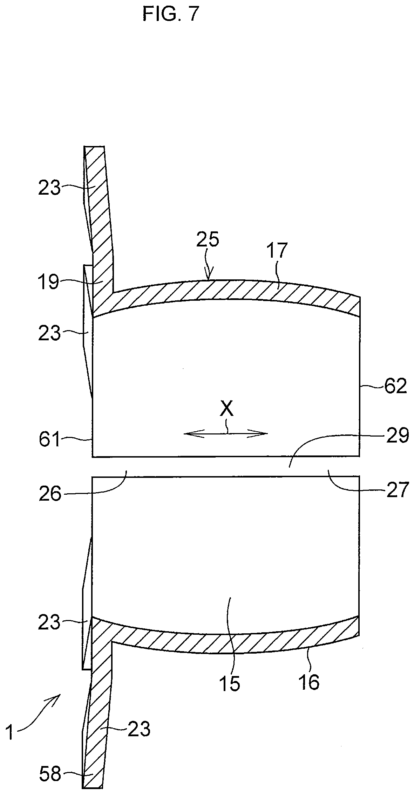

In addition, in the above-described bearing bush 1, although the hollow main body portion 25 includes the pair of cylindrical portions 6 and 12 and the curved bulged portion 17 interposed therebetween in the axial direction X, the hollow main body portion 25, as shown in Fig. 7, may alternatively include only one curved bulged portion 17 which has the curved concave inner surface 15 and the curved convex outer surface 16 and is continuously formed in the circumferential direction R. In this case, each of the curved concave inner surface 15 and the curved convex outer surface 16 is continuously connected to one and the other annular ring-shaped end faces 61 and 62 in the axial direction X of the hollow main body portion 25, i.e., the curved bulged portion 17, and extends from the annular ring-shaped end face 61 to the annular ring-shaped end face 62; the annular ring-shaped collar portion 19 is provided in such a manner as to extend in the outward direction A in the radial direction Y from the one end portion of the curved convex outer surface 16; and the slit 29 consisting of the slits 26 and 27 communicating with each other has one end open at the annular ring-shaped end face 61 and the other end open at the annular ring-shaped end face 62, extends from the annular ring-shaped end face 61 to the annular ring-shaped end face 62, and splits the curved bulged portion 17 in the circumferential direction R, while the slit 28 is provided on the annular ring-shaped collar portion 19 in such a manner as to communicate with the slit 26.

Effects similar to those of the bearing bush 1 shown in Figs. 1 and 2 can also be obtained by the respective bearing bushes 1 on the side wall 39 side and the side wall 40 side which are each comprised of the hollow main body portion 25 constituted by the curved bulged portion 17, as shown in Fig. 7, and are adapted to be disposed between the boss 31 and the shaft member 38, such that both ends in the axial direction X of the curved concave inner surface 15 are respectively brought into contact with the outer surface 55 of the shaft member 38 and the curved convex outer surface 16 is brought into contact with the cylindrical inner surface 57 of the boss 31, so as to form the annular void space 56 between the curved concave inner surface 15 and the cylindrical outer surface 55 of the shaft member 38, while the distal end portions 58 of the respective inclined plate portions 23 are brought into contact with the side wall 39 and the side wall 40, respectively.

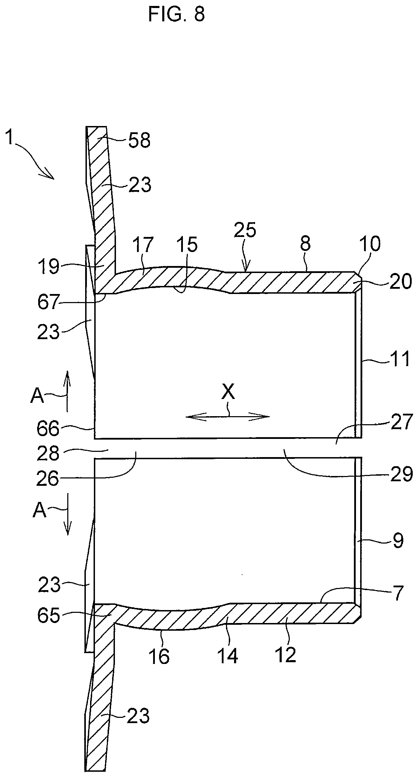

Furthermore, in the above-described bearing bushes 1, although the hollow main body portion 25 includes the pair of cylindrical portions 6 and 12 and the curved bulged portion 17 interposed therebetween or includes only the curved bulged portion 17, the hollow main body portion 25, as shown in Fig. 8, may alternatively include the cylindrical portion 12 having the cylindrical inner surface 7 and the cylindrical outer surface 8 and the curved bulged portion 17 continuously connected to the cylindrical portion 12 in the axial direction X and having the curved concave inner surface 15 and the curved convex outer surface 16. In this case, the annular ring-shaped collar portion 19 is provided in such a manner as to extend in the outward direction A in the radial direction Y from one annular ring-shaped end portion 65 of the curved bulged portion 17 to which the one end portion 14 of the cylindrical portion 12 is continuously connected in the axial direction X. The other end portion in the axial direction X of the hollow main body portion 25 having the end portion 65 as one end portion in the axial direction X is constituted by the other end portion 20 of the cylindrical portion 12. The slit 29 consisting of the slits 26 and 27 communicating with each other has one end in the axial direction X open at an annular ring-shaped end face 66 in the axial direction X of the curved bulged portion 17 and the other end in the axial direction X open at the annular ring-shaped end face 11, extends from the annular ring-shaped end face 66 to the annular ring-shaped end face 11, and splits the curved bulged portion 17 and the cylindrical portion 12 in the circumferential direction R, while the slit 28 for splitting the annular ring-shaped collar portion 19 in the circumferential direction R is provided on the annular ring-shaped collar portion 19 in such a manner as to communicate with the slit 26.

Effects similar to those of the bearing bush 1 shown in Figs. 1 and 2 can also be obtained by the respective bearing bushes 1 on the side wall 39 side and the side wall 40 side which are each comprised of the hollow main body portion 25 having the curved bulged portion 17 and the cylindrical portion 12, as shown in Fig. 8, and are adapted to be disposed between the boss 31 and the shaft member 38, such that a cylindrical inner surface 67 at the end portion 65 of the curved bulged portion 17 continuously connected to the curved concave inner surface 15 in the axial direction X and the cylindrical inner surface 7 of the cylindrical portion 12 continuously connected to the curved concave inner surface 15 in the axial direction X are respectively brought into contact with the outer surface 55 of the shaft member 38 and the curved convex outer surface 16 is brought into contact with the inner surface 57 of the boss 31, so as to form the annular void space 56 between the curved concave inner surface 15 and the cylindrical outer surface 55 of the shaft member 38, while the distal end portions 58 of the respective inclined plate portions 23 are brought into contact with the side wall 39 and the side wall 40, respectively.

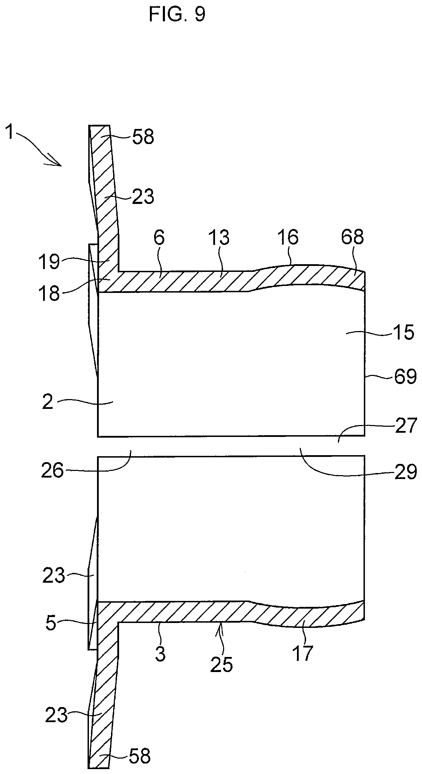

In the embodiment shown in Fig. 8, although the hollow main body portion 25 includes the curved bulged portion 17 having the end portion 65 with the annular ring-shaped collar portion 19 provided thereon, the hollow main body portion 25, as shown in Fig. 9, may alternatively include the cylindrical portion 6 having the cylindrical inner surface 2 and the cylindrical outer surface 3 and the curved bulged portion 17 continuously connected to the cylindrical portion 6 in the axial direction X and having the curved concave inner surface 15 and the curved convex outer surface 16, and the annular ring-shaped collar portion 19 may be provided in such a manner as to extend in the outward direction A in the radial direction Y from the end portion 18 of the cylindrical portion 6 having the end portion 13 to which the one end portion in the axial direction X of the curved bulged portion 17 is continuously connected. In this case, the other end portion in the axial direction X of the hollow main body portion 25 having the end portion 18 as one end portion in the axial direction X is constituted by another end portion 68 of the curved bulged portion 17. The slit 29 consisting of the slits 26 and 27 communicating with each other has one end in the axial direction X open at an annular ring-shaped end face 5 of the cylindrical portion 6 and the other end in the axial direction X open at an annular ring-shaped end face 69 of the end portion 68 in the axial direction X of the curved bulged portion 17, extends from the annular ring-shaped end face 5 to the annular ring-shaped end face 69, and splits the cylindrical portion 6 and the curved bulged portion 17 in the circumferential direction R, while the slit 28 for splitting the annular ring-shaped collar portion 19 in the circumferential direction R is provided on the annular ring-shaped collar portion 19 in such a manner as to communicate with the slit 26.

Effects similar to those of the bearing bush 1 shown in Figs. 1 and 2 can also be obtained by the respective bearing bushes 1 on the side wall 39 side and the side wall 40 side which are each comprised of the hollow main body portion 25 having the cylindrical portion 6 and the curved bulged portion 17, as shown in Fig. 9, and are adapted to be disposed between the boss 31 and the shaft member 38, such that the cylindrical inner surface 2 of the cylindrical portion 6 and the curved concave inner surface 15 at the end portion 68 are respectively brought into contact with the outer surface 55 of the shaft member 38 and the curved convex outer surface 16 is brought into contact with the inner surface 57 of the boss 31, so as to form the annular void space 56 between the curved concave inner surface 15 and the cylindrical outer surface 55 of the shaft member 38, while the distal end portions 58 of the respective inclined plate portions 23 are brought into contact with the side wall 39 and the side wall 40, respectively.

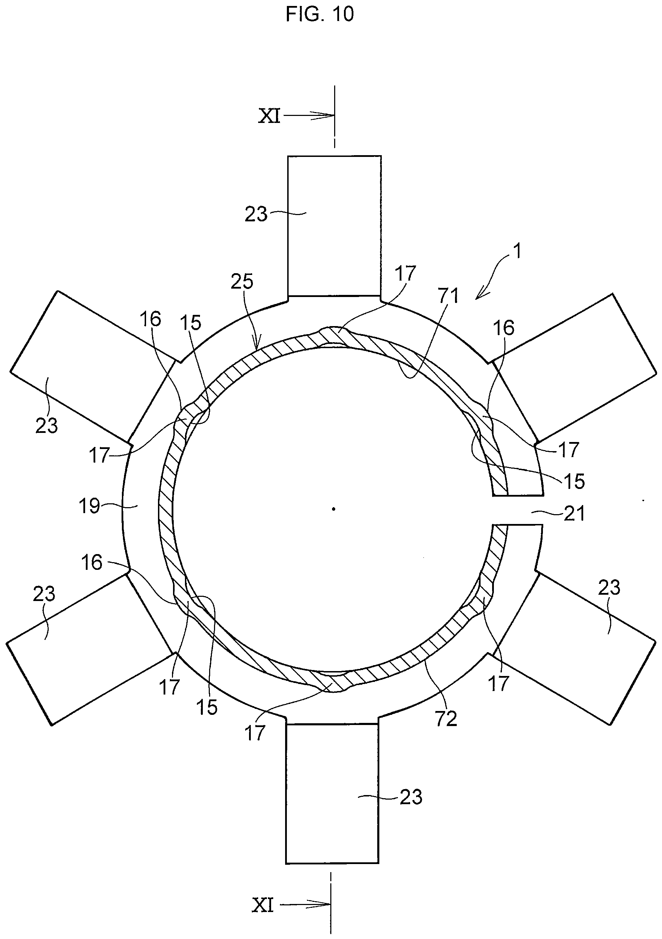

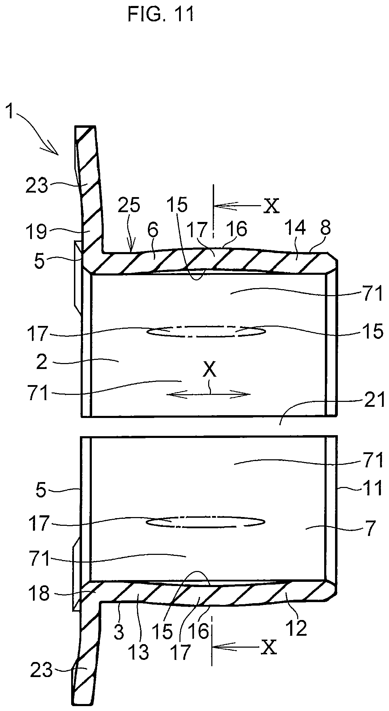

Incidentally, in any one of the above-described bearing bushes 1, the hollow main body portion 25 has a single curved bulged portion 17 which is continuously formed in the circumferential direction R. Alternatively, however, in the bearing bush 1 shown in, for example, Fig. 1, the hollow main body portion 25, as shown in Figs. 10 and 11, may have a plurality of (in the drawings, six) curved bulged portions 17 which are arranged at intervals, preferably at equal intervals, in the circumferential direction R. In this case, the respective curved concave inner surfaces 15 and curved convex outer surfaces 16 of the curved bulged portions 17 may be constituted by portions of elliptical surfaces. In the case where the plurality of curved bulged portions 17 are provided, the hollow main body portion 25 has cylindrical inner surfaces 71 and cylindrical outer surfaces 72 which are respectively sandwiched by the cylindrical inner surface 2 and the cylindrical outer surface 3, on the one hand, and the cylindrical inner surface 7 and the cylindrical outer surface 8, on the other hand, in the axial direction X, are flush with the cylindrical inner surface 2 and the cylindrical outer surface 3 and with the cylindrical inner surface 7 and the cylindrical outer surface 8, and are separated by the curved bulged portions 17 in the circumferential direction R.

Effects similar to those of the bearing bush 1 shown in Figs. 1 and 2 can also be obtained by the respective bearing bushes 1 on the side wall 39 side and the side wall 40 side which are each comprised of the hollow main body portion 25 having the plurality of curved bulged portions 17, as shown in Figs. 10 and 11, and are adapted to be disposed between the boss 31 and the shaft member 38, such that the cylindrical inner surfaces 2 and 7 and the cylindrical inner surfaces 71 are respectively brought into contact with the outer surface 55 of the shaft member 38 and the curved convex outer surfaces 16 are respectively brought into contact with the inner surface 57 of the boss 31, so as to form a plurality of annular void spaces 56 at intervals in the circumferential direction R between the respective curved concave inner surfaces 15 and the cylindrical outer surface 55 of the shaft member 38, while the distal end portions 58 of the respective inclined plate portions 23 are brought into contact with the side wall 39 and the side wall 40, respectively.

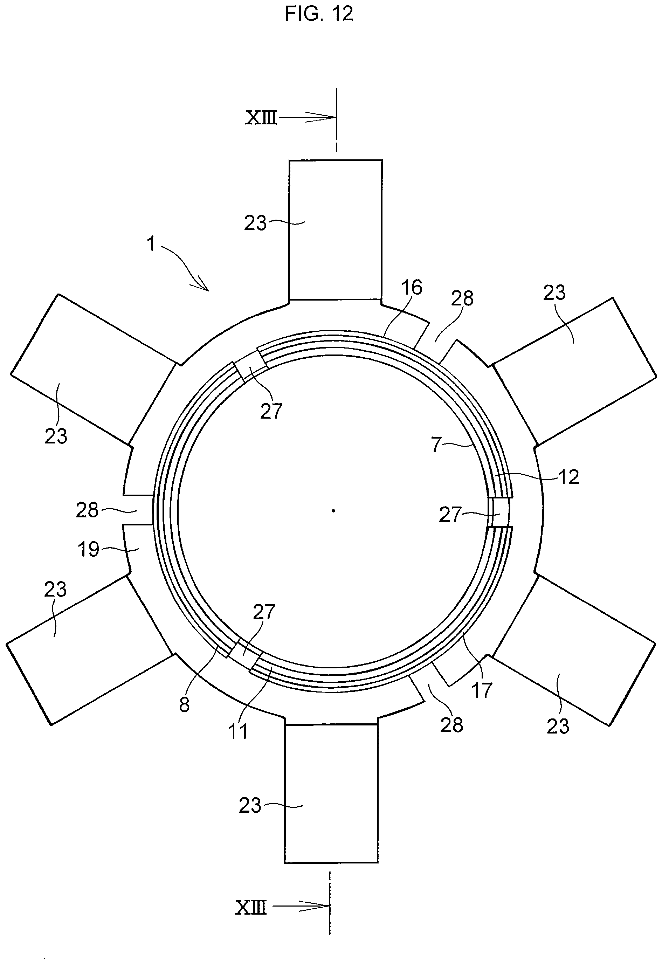

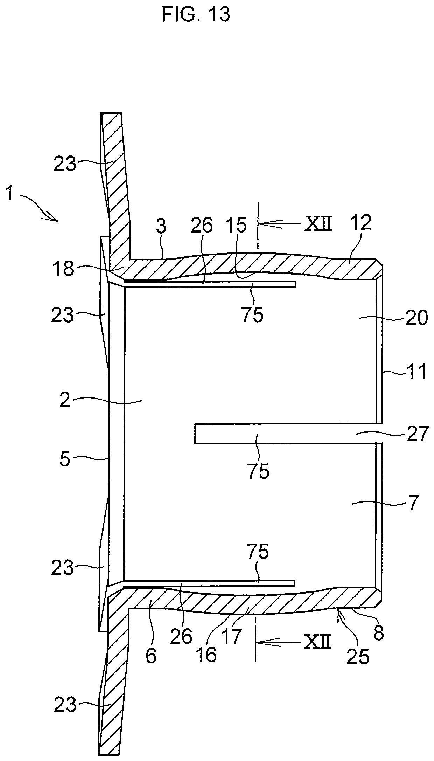

Furthermore, in any one of the above-described bearing bushes 1, the single slit 29 is formed by the slits 26 and 27 communicating with each other and the slit 26 is communicated with the slit 28 so as to render the hollow main body portion 25 reducible in diameter. Alternatively, however, in the bearing bush 1 as shown in Fig. 1, for example, as shown in Figs. 12 and 13, the hollow main body portion 25 may be provided with a plurality of (in the drawings, three) slits 26 which are spaced apart from each other at intervals, i.e., at equal intervals in the drawings, in the circumferential direction R, and which each have one end open at the annular ring-shaped end face 5 and the other end terminating between the end portions 18 and 20 in the axial direction X and with a plurality of (in the drawings, three) slits 27 which are similarly spaced apart from each other at intervals, i.e., at equal intervals in the drawings, in the circumferential direction R, which each have one end open at the annular ring-shaped end face 11 and the other end terminating between the end portions 18 and 20 in the axial direction X, and which is interposed between the slits 26 in the circumferential direction R, respectively, such that the slits 26 and the slits 27 have overlapping portions 75 which overlap with each other in the circumferential direction R, and a plurality of (in the drawings, three) slits 28 communicating with the respective slits 26 at the end portion 18 are provided in the annular ring-shaped collar portion 19, to thereby render the hollow main body portion 25 reducible in diameter.

Also with the bearing bush 1 shown in Figs. 12 and 13, when used in the pedal device 30, it is possible to constantly maintain the bearing clearance to an appropriate value and prevent the generation of abnormal noise attributable to the bearing clearance. Moreover, the lateral swaying of the pedal arm 35 attributable to the clearance in the radial direction Y between the side wall 39 of the pedal bracket 41 and the bearing bush 1 and the clearance in the radial direction Y between the side wall 40 of the pedal bracket 42 and the bearing bush 1 can be absorbed by the elastic deformation in the axial direction X of the inclined plate portions 23, thereby making it possible to prevent the lateral swaying of the pedal arm 35 and, hence, the generation of abnormal noise attributable to the lateral swaying.

### DESCRIPTION OF REFERENCE NUMERALS

- 1:: bearing bush
- 2, 7, 67:: cylindrical inner surface
- 3, 8, 72:: cylindrical outer surface
- 4, 9:: annular ring-shaped tapered inner surface
- 5, 11,61, 62, 66, 69, 71:: annular ring-shaped end face
- 6, 12:: cylindrical portion
- 10:: annular ring-shaped tapered outer surface
- 13, 14, 18, 20, 36, 37, 65, 68:: end portion
- 15:: curved concave inner surface
- 16:: curved convex outer surface
- 17:: curved bulged portion
- 19:: annular ring-shaped collar portion
- 21,26,27,28,29:: slit
- 22:: outer peripheral edge
- 23:: inclined plate portion

## Claims

1. A bearing bush comprising:
a hollow main body portion;
an inclined plate portion provided at one end portion of said hollow main body portion;
at least one first slit provided in said hollow main body portion in such a manner as to extend from the one end portion of said hollow main body portion toward another end portion of said hollow main body portion;
at least one second slit provided in said hollow main body portion in such a manner as to extend from the other end portion of said hollow main body portion toward the one end portion of said hollow main body portion; and
at least one third slit provided in the inclined plate portion in such a manner as to communicate with said first slit at the one end portion of said hollow main body portion,
wherein said hollow main body portion is rendered reducible in diameter by said first to said third slits, and said inclined plate portion is inclined in a direction directed from the other end portion of said hollow main body portion toward the one end portion of said hollow main body portion.

2. A bearing bush comprising:
a hollow main body portion having an annular curved concave inner surface and an annular curved convex outer surface;
an annular collar portion provided in such a manner as to extend radially outwardly from one end portion of said hollow main body portion;
at least one first slit provided in said hollow main body portion in such a manner as to extend from the one end portion of said hollow main body portion toward another end portion of said hollow main body portion;
at least one second slit provided in said hollow main body portion in such a manner as to extend from the other end portion of said hollow main body portion toward the one end portion of said hollow main body portion;
at least one third slit provided in said annular collar portion in such a manner as to communicate with said first slit at the one end portion of said hollow main body portion; and
at least one inclined plate portion provided in such a manner as to extend in a radially outward direction from an outer peripheral edge of said annular collar portion while being inclined in a direction directed from the other end portion of said hollow main body portion toward the one end portion of said hollow main body portion,
wherein said hollow main body portion is rendered reducible in diameter by said first to said third slits.

3. The bearing bush according to claim 2, wherein said hollow main body portion includes a pair of cylindrical portions each having a cylindrical inner surface and a cylindrical outer surface and at least one curved bulged portion interposed between the pair of cylindrical portions and having a curved concave inner surface and a curved convex outer surface, and said annular collar portion is provided in such a manner as to extend radially outwardly from a cylindrical outer surface of one end portion of one of the cylindrical portions.

4. The bearing bush according to claim 2, wherein said hollow main body portion includes at least one curved bulged portion having a curved concave inner surface and a curved convex outer surface, the curved concave inner surface and the curved convex outer surface are respectively continuously connected to respective ones of one and another annular ring-shaped end faces of said hollow main body portion and extend from the one annular ring-shaped end face to the other annular ring-shaped end face, and said annular collar portion is provided in such a manner as to extend radially outwardly from the curved convex outer surface of the curved bulged portion.

5. The bearing bush according to claim 2, wherein said hollow main body portion includes a cylindrical portion having a cylindrical inner surface and a cylindrical outer surface and at least one curved bulged portion continuously connected to the cylindrical portion and having a curved concave inner surface and a curved convex outer surface, said annular collar portion is provided in such a manner as to extend radially outwardly from one end portion of the cylindrical portion to which one end portion of the curved bulged portion is continuously connected, and the other end portion of said hollow main body portion is constituted by another end portion of the curved bulged portion.

6. The bearing bush according to claim 2, wherein said hollow main body portion includes a cylindrical portion having a cylindrical inner surface and a cylindrical outer surface and at least one curved bulged portion continuously connected to the cylindrical portion and having a curved concave inner surface and a curved convex outer surface, said annular collar portion is provided in such a manner as to extend radially outwardly from one end portion of the curved bulged portion to which one end portion of the cylindrical portion is continuously connected, and the other end portion of said hollow main body portion is constituted by another end portion of the cylindrical portion.

7. The bearing bush according to any one of claims 2 to 6, wherein said hollow main body portion includes one curved bulged portion which is continuously formed in a circumferential direction.

8. The bearing bush according to any one of claims 3 to 6, wherein said hollow main body portion includes a plurality of curved bulged portions arranged at intervals in a circumferential direction.

9. The bearing bush according to any one of claims 2 to 8, wherein said at least one first slit communicates with said at least one second slit so as to form one slit which extends from the annular ring-shaped end face of the one end portion of said hollow main body portion to the annular ring-shaped end face of the other end portion thereof and splits said hollow main body portion in the circumferential direction.

10. The bearing bush according to any one of claims 2 to 8, wherein respective ones of said at least one first and said second slits spaced apart from each other in the circumferential direction terminate between the one and the other end portions of said hollow main body portion, and have overlapping portions which overlap with each other in the circumferential direction.

11. The bearing bush according to any one of claims 2 to 10, comprising a plurality of inclined plate portions, said plurality of inclined plate portions being formed integrally on the outer peripheral edge of said annular collar portion in such a manner as to be spaced apart from each other in the circumferential direction.

12. The bearing bush according to any one of claims 2 to 11, wherein said hollow main body portion, said annular collar portion, and said inclined plate portions are integrally formed of a synthetic resin, a nonferrous metal plate, or a stainless steel plate.

13. The bearing bush according to any one of claims 2 to 11, wherein said hollow main body portion, said annular collar portion, and said inclined plate portions are integrally formed of a multilayered plate including a thin steel plate, a porous sintered metal layer formed integrally on the thin steel plate, and a synthetic resin layer filled in and coated on the porous sintered metal layer.

14. A pedal device comprising: a cylindrical boss; a pedal arm fixed to said boss; a shaft member disposed in said boss relatively rotatably with respect to said boss; a pedal bracket with both ends of said shaft member fixed respectively thereto; and the bearing bush according to any one of claims 2 to 13, wherein said hollow main body portion is disposed between said boss and said shaft member such that the curved convex outer surface is brought into contact with an inner surface of said boss, and said inclined plate portions are brought into contact with said pedal bracket, so as to form an annular void space between the curved concave inner surface and the outer surface of said shaft member.
